# EUROPÄISCHE PATENTSCHRIFT

(11) **EP 2 322 061 B1**
(45) Veröffentlichungstag und Bekanntmachung des Hinweises auf die Patenterteilung: **30.09.2015**
(21) Anmeldenummer: 10172367.4
(22) Anmeldetag: 24.05.2007
(51) Int. Cl.: A47C 27/15, A47C 27/20, B60N 2/70, A47C 27/14

(54) **Federelementeinheit für ein Polsterelement, insbesondere eine Matratze**
Spring element unit for a padding element, especially a mattress
Unité à éléments à ressorts utilisée pour un élément de rembourrage, en particulier un matelas

(30) Priorität: 30.05.2006 DE 102006025136
(43) Veröffentlichungstag der Anmeldung: 18.05.2011
(62) Teilanmeldung aus: 10169303.4
(73) Patentinhaber: METZELER SCHAUM GMBH, 87700 Memmingen (DE)
(72) Erfinder: Steppat, Maik, 87779, Trunkelsberg (DE); Puhane, Barbara, 87700, Memmingen (DE); Maidhof, Volker, 87776, Sontheim (DE); Bauer, Andreas, 87766, Memmingerberg (DE); Hohenhorst, Manfred, 88430, Rot an der Rot (DE)
(74) Vertreter: Flügel Preissner Kastel Schober

(56) Entgegenhaltungen:
- DE-C1- 19 521 910
- DE-U1-202005 015 047
- GB-A- 476 659
- GB-A- 902 272
- JP-A- 8 103 581
- JP-A- 2004 041 513

## Beschreibung

Die vorliegende Erfindung betrifft eine Federelementeinheit gemäß dem Oberbegriff des Anspruchs 1.

Bei bekannten Federkernmatratzen sind in Stofftaschen eingebrachte Metallfedern als Federelemente vorgesehen. Der so gebildete Metallfederkern wird auch als Bonnellfederkern oder Taschenfederkern bezeichnet. Oberhalb des Metallfederkerns wird eine aus Schaumstoff bestehende Polsterung positioniert, die in der Regel aus Blockschaum gefertigt ist und eine bestimmte Elastizität aufweist. Ferner sind Schaumstoffmatratzen mit in den Schaumstoffkern eingearbeiteten Drahtfedern bekannt.

Aus der DE 299 18 893 U1 ist ein Polsterelement für Möbel und Matratzen bekannt, bei dem eine Vielzahl von Federelementen zu einem flächigen Verbund zusammengestellt ist. Hierbei sind die Federelemente aus Schafwolle gefertigt und in vorzugsweise aus Baumwolle hergestellten Taschen eingefüllt, wobei die oberen Stirnseiten der Taschenfedern die spätere Lastfläche bilden. Zur Schaffung eines großflächigen Polsterelementes wird eine Vielzahl der Federelemente nebeneinander angeordnet und in einzelnen Reihen jeweils miteinander verbunden, vorzugsweise miteinander vernäht.

GB 902 272 A offenbart ebenfalls eine Federelementeinheit mit einer Vielzahl von Federelementen. Diese Federelemente sind nicht untereinander stoffschlüssig verbunden.

Ferner ist aus der DE 39 37 214 A1 ein Polsterelement zur Lagerung eines liegenden menschlichen Körpers bekannt. Ein Matratzenteil aus elastischem Werkstoff, wie beispielsweise Schaumstoff, weist eine Vielzahl nebeneinander angeordneter Kanäle auf, in die Einsatzstücke unterschiedlicher Elastizität eingeschoben sind, so dass das Matratzenteil über seine Liegefläche lokal unterschiedliche Elastizitätsbereiche aufweist. Die Einsatzstücke können aus einem elastischen Werkstoff entsprechend demjenigen des Matratzenteils bestehen.

Bei diesen bekannten Polsterelementen, insbesondere in der Anwendung für Matratzen, hat es sich als nachteilig erwiesen, dass zwischen dem Körper der Person und dem Polsterelement ein Wärme- und Feuchtigkeitsstau entsteht. Diese Problematik tritt bei Matratzen in verstärktem Maße auf, da sich dort die Wärme und Feuchtigkeit infolge der Abdeckung des menschlichen Körpers mit einer Decke, insbesondere im Bereich der Liegefläche der Matratze, ansammelt, die mit dem menschlichen Körper in Kontakt steht.

Der Erfindung liegt die **Aufgabe** zugrunde, eine Federelementeinheit und ein Polsterelement vorzuschlagen, die einen Wärme- und Feuchtigkeitsstau zwischen dem Körper und dem Polsterelement verhindern.

Zur **Lösung** dieser Aufgabe ist eine Federelementeinheit nach Anspruch 1 vorgesehen.

Die erfindungsgemäße Federelementeinheit beruht auf der Erkenntnis, das Federelement vollständig aus einem elastischen Polyurethan-Weichschaumstoff zu formen und mit wenigstens einer Ausnehmung zu versehen. Die Ausnehmung dient zum Abtransport von Wärme und Feuchtigkeit beziehungsweise dazu, dass Luft in Richtung der Abstützfläche der Sitz- oder Liegeanordnung strömen kann. Mit anderen Worten bildet die Ausnehmung einen Luftkanal. Grundsätzlich kann das Federelement auch mit mehreren Ausnehmungen versehen werden. Da das Federelement aus einem atmungsaktiven Weichschaumstoff hergestellt ist, wird der Abtransport von Wärme und Feuchtigkeit durch eine Luftströmung zur Abstützfläche hin zusätzlich verbessert.

Hinzu kommt, dass der Polyurethan-Weichschaumstoff auf einfache Weise mittels Formschäumen in beliebige Formen gebracht werden kann und somit Federelemente unterschiedlichster Formgebung je nach Anwendungsfall und gewünschten Materialkennwerten, wie Elastizität- und Durchlässigkeitswerten, gefertigt werden können. Ferner erweist sich Polyurethan-Weichschaumstoff vorteilhaft in Hinblick auf die Langzeit- beziehungsweise Dauerbelastbarkeit.

Zudem ist das Federelement frei von Metall, das heißt es erfordert keine metallischen Einlagen beispielsweise in Form von Stahlfedern. Infolgedessen eignet sich die erfindungsgemäße Federelementeinheit insbesondere für Personen, die empfindlich gegen von metallischen Körpern ausgehende magnetische Strahlung sind.

Die einzelnen Federelemente können mit unterschiedlichen Materialkennwerten, wie insbesondere unterschiedlichen Eindrückhärten, hergestellt werden und so je nach Bedarf zu einem Paket als Federelementeinheit zusammengestellt werden. Bei Bedarf können einzelne Federelemente ausgetauscht werden.

Die erfindungsgemäße Federelementeinheit kann bei einer Vielzahl von Anwendungen eingesetzt werden. Unter anderem eignet sich die Federelementeinheit für eine Matratze, aber auch für einen Sitz, insbesondere einen Kraftfahrzeug- oder einen Fluggastsitz. Hierbei kann die erfindungsgemäße Federelementeinheit sowohl für die Sitzfläche als auch für die Rückenlehne eingesetzt werden. Weiterhin kann das erfindungsgemäße Federelementeinheit bei Polstermöbeln verwendet werden.

Vorteilhafte Ausgestaltungen der erfindungsgemäßen Federelementeinheit sind Gegenstand der Ansprüche 2 bis 9.

Eine vorteilhafte Ausgestaltung besteht darin, dass die Ausnehmung das Federelement vollständig in dessen Axialrichtung durchdringt. So kann das Federelement beispielsweise eine erste Stirnfläche und eine zweite Stirnfläche aufweisen, wobei sich die Ausnehmung dann von der ersten Stirnfläche durchgehend bis zur zweiten Stirnfläche erstreckt. Um einen geeigneten Lüftungskanal zu bilden, verläuft die Ausnehmung vorzugsweise im Wesentlichen senkrecht zur ersten und zweiten Stirnfläche.

Eine weitere vorteilhafte Ausgestaltung besteht darin, dass das Federelement aus Formschaum gefertigt ist. Hierzu wird bei der Herstellung des Federelements ein Reaktionsgemisch in eine Schäumform eingefüllt und durch Aufschäumen in die endgültige Form gebracht. Um dies erreichen zu können, ist die Schäumform derart ausgebildet, dass das Federelement bereits durch den Schäumvorgang mit der Ausnehmung versehen wird. Auf diese Weise entfällt ein nachträgliches Bohren beziehungsweise Schneiden des Federelements, um die Ausnehmung herzustellen. So lässt sich mittels eines einfachen Schäumverfahrens ein einstückiges Federelement herstellen, das eine geeignete Punktelastizität und eine hohe Atmungsaktivität erreicht. Ferner kann auch eine einstückige Federelementeinheit mit mehreren Federelementen erzeugt werden.

Vorteilhaft ist die Ausnehmung etwa mittig angeordnet. Auf diese Weise wird ermöglicht, dass sich das Federelement bei der Belastung weitgehend symmetrisch verformt und somit die einzelnen Bereiche des Federelementes weitgehend gleichmäßig beansprucht werden. Ferner kann die Ausnehmung derart positioniert werden, dass ein bestimmtes Verformungsverhalten erreicht wird.

Hinsichtlich der Formgebung der Ausnehmung erweist es sich als vorteilhaft, wenn die Ausnehmung im Querschnitt und/oder im Längsschnitt eine geradlinige oder kurvenartige Form aufweist. Eine solche Formgebung umfasst auch abschnittsweise geradlinige beziehungsweise kurvenartige und eine kombinierte Form. Auf diese Weise kann auch durch die Formgebung der Ausnehmung das Verformungsverhalten des Federelementes gesteuert beziehungsweise beeinflusst werden. Ferner kann die Form der Ausnehmung entlang ihrer Erstreckungsrichtung innerhalb des Federelementes variabel sein, beispielsweise kegelförmig.

Auch hinsichtlich der Formgebung des Federelements, das heißt hauptsächlich im Hinblick auf die äußere Mantelfläche des Federelements, können verschiedenartigste Formen gewählt werden. So bietet sich vorrangig eine tonnen- beziehungsweise röhrenartige Form an, das heißt eine Form mit einer eckigen oder runden Grundfläche. Hier kommt beispielsweise eine mindestens dreieckige, insbesondere achteckige, eine kreisrunde oder eine ellipsenförmige Ausgestaltung in Frage. Weiterhin kommt eine über die Höhe der Federelementeinheit veränderliche Querschnittsform in Betracht, wie beispielsweise eine taillierte Form. Auch mittels einer solchen Formgebung der äußeren Mantelfläche des Federelements lässt sich dessen Verformungsverhalten beeinflussen.

Erfindungsgemäß ist die Federelementeinheit durch eine Vielzahl von nebeneinander angeordneten Federelementen gekennzeichnet, wobei die Federelemente untereinander stoffschlüssig verbunden sind. Auf diese Weise lässt sich eine Federelementeinheit mit beliebiger Anzahl von Federelementen zusammenstellen. Solche unterschiedlichen Federelementpakete können dann zur Bildung einer Abstützfläche miteinander kombiniert werden, wobei die einzelnen Pakete beispielsweise unterschiedliche Elastizitätswerte aufweisen, um den Anforderungen hinsichtlich verschiedener Liege- oder Sitzzonen gerecht werden zu können. Von Vorteil ist ferner, wenn die stoffschlüssige Verbindung wenigstens teilweise elastisch ist. So kann eine zu starre Verbindung der Federelemente verhindert werden.

Zweckmäßigerweise sind die Federelemente derart nebeneinander angeordnet, dass in einem Bereich zwischen den Aussenflächen benachbarter Federelemente ein Freiraum vorhanden ist. Dieser Freiraum wird vorzugsweise durch eine geeignete Wahl der Form des Federelementes unter Berücksichtigung der verbundartigen Zusammenstellung erreicht. Beispielsweise eignet sich eine achteckige Grundrissform für das Federelement. Der zwischen den Federelementen gebildete Freiraum kann ebenfalls zum Abtransport von Wärme und Feuchtigkeit von der Sitz- beziehungsweise Liegefläche verwendet werden.

Weiterhin wird zur **Lösung** der oben genannten Aufgabe in Übereinstimmung mit Anspruch 10 ein Polsterelement, insbesondere eine Matratze, mit einem Grundkörper und einem erfindungsgemäßen Federelementeinheit vorgeschlagen.

Ein derartiges Polsterelement macht sich die Vorteile der erfindungsgemäßen Federelementeinheit zunutze. Darüber hinaus kann auf ein vergleichsweise aufwendiges Verbinden von mehreren Federelementen in reihenartiger Anordnung mittels Bändern oder auf die Ausbildung von Taschen und deren Einbindung in einen Matratzenkern verzichtet werden. Ferner kann der Grundkörper bevorzugt ebenfalls aus einem Schaumstoffmaterial bestehen, wodurch dann das gesamte Polsterelement metallfrei ist. Zudem lässt sich der Grundkörper auf einfache Weise aus einem Blockschaum herstellen und in beliebiger Abmessung fertigen. Hinsichtlich der Vorteile der vorzugsweise separat hergestellten Federelementeinheit wird auf obige Ausführungen verwiesen.

Vorteilhafte Ausgestaltungen des erfindungsgemäßen Posterelements sind in den Ansprüchen 11 bis 22 beansprucht.

Bei einer vorteilhaften Ausgestaltungsform weist der Grundkörper wenigstens eine Aussparung auf, in der die Federelementeinheit aufgenommen ist. Somit können auf der Grundfläche der Aussparung eine Vielzahl von nebeneinander angeordneten Federelementen als eine Federelementeinheit gelagert und beispielsweise durch eine umlaufende Wandung des Grundkörpers seitlich gestützt werden. Vorzugsweise weist die Federelementeinheit etwa die gleiche Höhe wie die Aussparung auf. Die Aussparung kann in Bezug auf die Grundfläche des Grundkörpers beispielsweise in einem solchen Bereich vorgesehen werden, in welchem die Schulterpartie oder das Gesäß einer Person abgestützt wird. Es kann auch nur eine einzige, sich im Wesentlichen über den gesamten Bereich erstreckende Aussparung ausgebildet werden. Von Vorteil ist es insbesondere, bei einer Liege eine Aussparung für den Schulterbereich und eine weitere Aussparung für den Gesäßbereich vorzusehen.

In einer weiteren bevorzugten Ausgestaltung ist ein Abdeckkörper zur Auflage auf der Federelementeinheit und/oder auf dem Grundkörper vorgesehen, wobei der Abdeckkörper stoffschlüssig mit dem Grundkörper und/oder der Federelementeinheit verbunden, vorzugsweise verklebt, ist. Insbesondere für den Fall, dass in dem Grundkörper eine Ausnehmung vorgesehen ist, bildet der Abdeckkörper quasi einen Deckel und stellt somit einen oberen Abschluss des Polsterelementes dar. Vorteilhafterweise ist der Abdeckkörper aus Polyurethan-Weichschaumstoff hergestellt. Alternativ kann der Abdeckkörper durch eine luftdurchlässige Schicht, insbesondere einen luftdurchlässigen Bezug, gebildet werden.

Zur Gewährleistung einer dauerhaft festen Positionierung der Federelementeinheit relativ zu dem Grundkörper, ist die Federelementeinheit mit dem Grundkörper stoffschlüssig verbunden, vorzugsweise verklebt. Die Verbindung erfolgt bevorzugt an der Unterseite der Federelementeinheit, das heißt im Bereich jener Fläche, die die Belastung durch den auf dem Polsterelement sitzenden oder liegenden Körper auf den Grundkörper überträgt. Für den Fall, dass die Federelementeinheit in einer Aussparung des Grundkörpers gelagert ist, kann die Federelementeinheit alternativ oder zusätzlich über deren Seitenflächen zumindest abschnittsweise mit der die Ausnehmung begrenzenden Randfläche des Grundkörpers verbunden sein.

Bei einer weiteren vorteilhaften Ausführungsform ist der Grundkörper gleichermaßen wie das Federelement aus Polyurethan-Weichschaumstoff gefertigt. Vorzugsweise wird der Gründkörper aus Blockschaum hergestellt, so dass ein vollautomatisiertes kontinuierlich durchlaufendes Herstellungsverfahren zur Anwendung kommen kann. Des Weiteren muss nicht eine Vielzahl von Ausgangsstoffen zur Herstellung von Federeinheit und Grundkörper vorgehalten werden.

Vorteilhafterweise sind der Grundkörper und/oder der Abdeckkörper aus Polyurethan-Weichschaumstoff hergestellt. So kann das gesamte Polsterelement aus einem Basismaterial hergestellt werden.

Ferner erweist es sich als vorteilhaft, wenn sich die Eindrückhärte der Federelementeinheit von der Eindrückhärte des Grundkörpers und/oder des Abdeckkörpers unterscheidet. Bevorzugt liegt die Eindrückhärte der Federelementeinheit in einem Bereich von etwa 40 N bis etwa 350 N, vorzugsweise in einem Bereich von etwa 60 N bis etwa 260 N.

Bei einer weiteren vorteilhaften Ausführungsform weist der Grundkörper und/oder der Abdeckkörper zueinander parallele Einschnitte auf. Diese Einschnitte können mit oder ohne Materialentnahme erfolgen. Zudem können die Einschnitte sowohl in Längs- als auch in Querrichtung vorgesehen werden. Mittels der Einschnitte wird die dem Material des Grundkörpers oder Abdeckkörpers eigene Oberflächenspannung reduziert.

Um Bereiche unterschiedlicher Härte zu erreichen, können die Einschnitte in bestimmten Zonen, wie beispielsweise der Schulterzone oder der Gesäßzone, unterschiedliche Abstände voneinander aufweisen. So lassen näher aneinanderliegende Einschnitte im Bereich der Schulterzone eine größere Weichheit zu, wodurch die Schulter weicher und tiefer einsinken kann, wohingegen Bereiche mit weiter auseinanderliegenden Einschnitten das Federungsverhalten verfestigen und somit mehr Abstützung bieten.

Von Vorteil ist ferner, wenn die Einschnitte einen sich nach innen erweiternden Querschnitt, insbesondere einen tropfenförmigen Querschnitt, aufweisen. Auf diese Weise wird die Durchlüftung zusätzlich verbessert.

Vorteilhaft sind der Grundkörper und/oder der Abdeckkörper aus Blockschaum gefertigt, so dass sich Grund- und/oder Abdeckkörper in einem kontinuierlichen Verfahren als Meterware beliebiger Abmessung herstellen lassen. Infolge der in der Regel einfachen geometrischen Abmessungen können Grund- und Abdeckkörper auf einfache Weise zugeschnitten werden. Ferner kann die wenigstens eine Aussparung auf einfache Weise und vollautomatisch durch Ausschneiden geformt werden.

Vorteilhafterweise ist die Federelementeinheit aus Formschaum gefertigt, wodurch sich ebenfalls ein einfaches Herstellungsverfahren verwirklichen lässt. Zudem kann das durch Formschäumen gefertigte Federelement nach der Entnahme aus dem Schäumwerkzeug auf einfache Weise und vorzugsweise ebenfalls vollautomatisch auf den Grundkörper aufgesetzt beziehungsweise in eine Aussparung des Grundkörpers eingesetzt werden. Dabei erweist sich insbesondere die in dem Federelement vorhandene Ausnehmung als hilfreich.

Schließlich kann vorgesehen sein, dass der Abdeckkörper einen luftdurchlässigen Bezug umfasst. Ein solcher Bezug kann alternativ oder zusätzlich zu dem oben erwähnten Polyurethan-Weichschaumstoffmaterial vorgesehen sein.

Nachfolgend wird die Erfindung unter Bezugnahme auf die Zeichnungen weiter erläutert. Dabei zeigen schematisch:

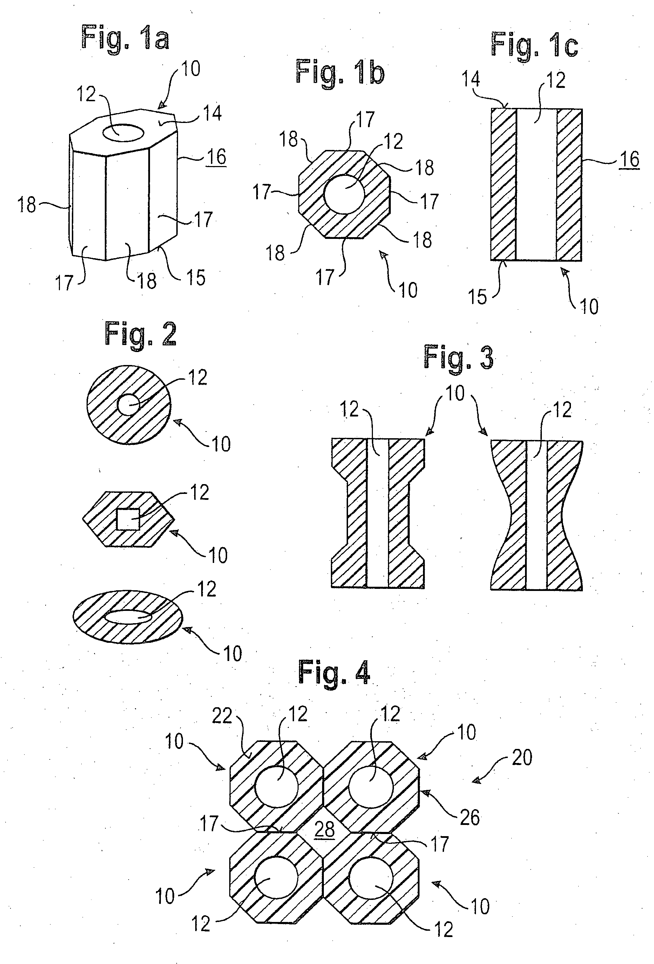

- Fig. 1a: eine perspektivische Ansicht einer ersten Ausführungsform der erfindungsgemäßen Federelementeinheit;
- Fig. 1 b: einen Horizontalschnitt durch die Federelementeinheit gemäß Fig. 1a;
- Fig. 1c: einen Vertikalschnitt durch die Federelementeinheit gemäß Fig. 1a;
- Fig. 2: weitere Ausführungsformen der erfindungsgemäßen Federelementeinheit im Horizontalschnitt alternativ zu Fig. 1b;
- Fig. 3: weitere Ausführungsformen der erfindungsgemäßen Federelementeinheit im Vertikalschnitt alternativ zu Fig. 1c;
- Fig. 4: einen Horizontalschnitt durch eine erfindungsgemäße Federelementeinheit mit mehreren Federelementen gemäß Fig. 1a;
- Fig. 5a: einen Vertikalschnitt durch eine erste Ausführungsform des erfindungsgemäßen Polsterelements mit einer Vielzahl von Federelementeinheiten gemäß Fig. 4;
- Fig. 5b: eine Ansicht von oben auf den Grundkörper des Polsterelementes gemäß Fig. 5a ohne Abdeckkörper;
- Fig. 6a: einen Vertikalschnitt durch eine zweite Ausführungsform des erfindungsgemäßen Polsterelements mit einer Vielzahl von Federelementeinheiten gemäß Fig. 4;
- Fig. 6b: einen Ansicht von oben auf den Grundkörper des Polsterelementes gemäß Fig. 6a ohne Abdeckkörper
- Fig. 7a: einen Längsschnitt durch eine dritte Ausführungsform des erfindungsgemäßen Polsterelements mit einer Vielzahl von Federelementeinheiten gemäß Fig. 4;
- Fig. 7b: einen Ansicht von oben auf den Grundkörper des Polsterelementes gemäß Fig. 7a ohne Abdeckkörper

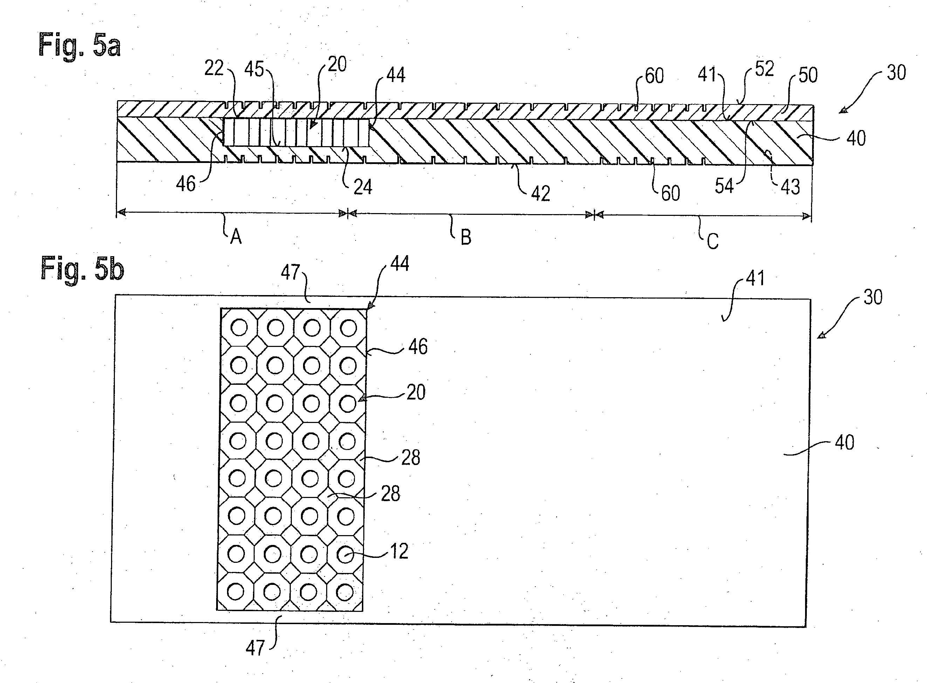

Die Fig. 1a bis 1c zeigen ein Federelement 10, aus dem sich die in Fig. 4 dargestellte Federelementeinheit 20 aufbaut. Die Federelementeinheit 20 findet Anwendung bei einem Polsterelement 30, beispielsweise in Form einer Matratze, wie in den Figuren 5a bis 7b gezeigt.

Das Federelement 10 besteht ausschließlich aus einem elastischen, offenzelligen Polyurethan-Weichschaumstoff und ist durch Formschäumen hergestellt. Das zylinderförmige Federelement 10 weist eine seitliche Mantelfläche 16, eine Oberseite 14, und eine Unterseite 15 auf. Die Oberseite 14 und die Unterseite 15 sind im Wesentlichen parallel zur Sitz- beziehungsweise Liegefläche ausgerichtet. Wie insbesondere Fig. 1b zeigt, weist das Federelement 10 einen sich über die gesamte Höhe des Federelementes 10 gleichbleibenden achteckigen Grundriss auf, so dass sich die Mantelfläche 16 in vertikale Anschlussflächen 17 und schräge Seitenflächen 18 unterteilt.

In der Mitte des Federelementes 10 ist eine sich in Axialrichtung erstreckende Ausnehmung 12 vorgesehen, die durch eine entsprechende Ausbildung des Schäumwerkzeuges entsteht. Die Ausnehmung 12 weist einen kreisförmigen Querschnitt (Horizontalschnitt) mit über die Höhe gleich bleibender Form (Vertikalschnitt) auf und dient als Luftkanal zum Abtransport von Wärme und Feuchtigkeit.

Alternativ dazu kann das Federelement 10 und/oder die Ausnehmung 12 die nur exemplarisch in den Figuren 2 und 3 angedeuteten Formen aufweisen, wobei auch die einzelnen Mantelflächen und Ausnehmungsformen miteinander kombiniert werden können. Wie in Fig. 2 dargestellt, kann das Federelement 10 im Horizontalschnitt betrachtet eine wenigstens abschnittsweise geradlinige oder kurvenartige Form, wie beispielsweise eine kreisförmige, ellipsenförmige oder sechseckige Form aufweisen. Ferner kann das Federelement 10, wie in Fig. 3 angedeutet, im Vertikalschnitt betrachtet mit einem über die Höhe veränderlichen Querschnitt versehen sein, wie beispielsweise eine kurvenartige Form, insbesondere eine taillierte Form, oder eine abschnittsweise geradlinige Form, wie beispielsweise eine kegelartige Form und auch Formen, bei denen die Breite beziehungsweise der Durchmesser der Ober- und Unterseite 14, 15 unterschiedlich groß ausgebildet sind.

Fig. 4 zeigt eine bevorzugte Ausgestaltungsform einer Federelementeinheit 20, die insgesamt vier Federelemente 10 entsprechend den Figuren 1a bis 1c aufweist. Die reihenartig nebeneinander zusammengestellten Federelemente 10 sind im Bereich deren gegenüberliegenden Anschlussflächen 17 mittels einer Klebeverbindung stoffschlüssig miteinander verbunden. Dabei kann die Klebeschicht zumindest teilweise elastisch ausgebildet sein, um eine zu starre Ausbildung der Verbindung zu verhindern. Infolge der achteckigen Grundrissform der Federelemente 10 und der Verbindung über die Anschlussflächen 17 wird zusätzlich zu den einzelnen mittigen Ausnehmungen 12 ein Freiraum 28 im Bereich zwischen den schrägen Seitenflächen 18 geschaffen, der ebenfalls einen Abtransport von Wärme und Feuchtigkeit ermöglicht.

Alternativ zu der in Fig. 4 gezeigten Federelementeinheit 20 mit vier Federelementen 10 sind auch andere Zusammenstellungen mit einer beliebigen Anzahl von Federelementen 10 denkbar. Auf diese Weise können vorgefertigte Federelementpakete oder Federelementreihen zur Verfügung gestellt werden.

Auf Grundlage der vorstehend erläuterten Federelementeinheit 20 gemäß Fig. 4 werden im Folgenden mehrere Ausgestaltungsformen eines mit einer Vielzahl von Federelementeinheiten 20 ausgestatteten Polsterelementes 30 erläutert. Dabei unterscheiden sich die Figuren 5a bis 7b im Wesentlichen durch die Anzahl der vorgesehenen Federelementeinheiten 20 und durch die davon abhängige Ausgestaltung beziehungsweise Anzahl der Aussparungen 44.

So zeigen sämtliche Figuren 5a bis 7b jeweils ein Polsterelement 30 in Form einer Matratze mit eine den Matratzenkern bildenden Grundkörper 40, einem Abdeckkörper 50 und einer Vielzahl von zwischen Abdeckkörper 50 und Grundkörper 40 angeordneten Federelementeinheiten 20. Sämtliche Bestandteile des Polsterelementes 30, das heißt die einzelnen Federelemente 10 zur Bildung der Federelementeinheit 20, der Grundkörper 40 und der Abdeckkörper 50 bestehen jeweils vollständig aus einem offenzelligen Polyurethan-Weichschaumstoff. Hierbei beträgt die Eindrückhärte der Federelemente 10 etwa 40 N bis etwa 350 N, vorzugsweise etwa 60 N bis etwa 260 N. Der Grundkörper 40 weist eine Oberseite 41, eine Unterseite 42 und eine umlaufende Seitenfläche 43 auf.

Alle in den Figuren 5a bis 7b dargestellten Aussparungen 44 werden bevorzugt durch Ausschneiden des entsprechenden Materialvolumens aus einem den Grundkörper 40 bildenden Blockschaumkörper hergestellt. Die Aussparung 44 ist jeweils durch eine im Wesentlichen horizontale Grundfläche 45 und eine im Wesentlichen vertikal ausgerichtete umlaufende Randfläche 46 begrenzt. In allen Ausgestaltungsformen gemäß den Figuren 5a bis 7b ist die Federelementeinheit 20 derart durch den Grundkörper 40 gestützt, dass die Federelementeinheit 20 in der Aussparung 44 gelagert ist. Mit anderen Worten liegt die Unterseite 24 der Federelementeinheit 20 auf der Grundfläche 45 auf. Um einen stabilen und dauerhaften Halt der Federelementeinheit 20 in der Aussparung 44 zu gewährleisten, ist die Unterseite 24 mit der Grundfläche 45 mittels einer Klebeschicht stoffschlüssig verbunden. Diese Klebeschicht kann vollflächig, streifenartig oder nur punktuell vorgesehen werden. Zwischen der Seitenfläche 26 der Federelementeinheit 20 und der Randfläche 46 des Grundkörpers 40 kann wenigstens abschnittsweise ein Spalt vorhanden sein. Die zwischen Seitenfläche 43 und Randfläche 46 verbleibende Umrandung 47 weist eine ausreichende Dicke auf, um einen seitlichen Halt der Federelementeinheit 20 sicherzustellen.

Alternativ zu dieser Klebverbindung steht die Seitenfläche 26 der Federelementeinheit 20 mit der Randfläche 46 vollumfänglich in Kontakt. Dieser Kontakt ergibt sich vorzugsweise durch eine Übermaßpassung, das heißt die Abmessungen der Aussparung 44 sind zumindest geringfügig kleiner als die Außenabmessungen der Federelementeinheit 20.

Nach Einsetzen der Federelementeinheit 20 in die Aussparung 44 und Festlegung vorzugsweise mittels einer Klebeschicht wird der Abdeckkörper 50 auf die Oberseite 41 des Grundkörpers 40 deckungsgleich aufgelegt und mittels einer zumindest stellenweise aufgebrachten Klebeschicht stoffschlüssig mit dem Grundkörper 40 verbunden. Zusätzlich wird die Unterseite des Abdeckkörpers 50 mit der Oberseite 22 der Federelementeinheit 20 verklebt. Der Abdeckkörper 50 weist eine entsprechende Dicke und/oder entsprechende Materialeigenschaften auf, so dass dieser ausreichend luftdurchlässig ist, um einen Wärme- und Feuchtigkeitsabtransport in Richtung zur Federelementeinheit 20 zu gewährleisten. In den Ausführungsbeispielen gemäß den Fig. 5a bis 7b weist der Abdeckkörper 50 eine Dicke von etwa 40 mm auf. Alternativ kann der Abdeckkörper 50 durch einen luftdurchlässigen Bezug gebildet werden.

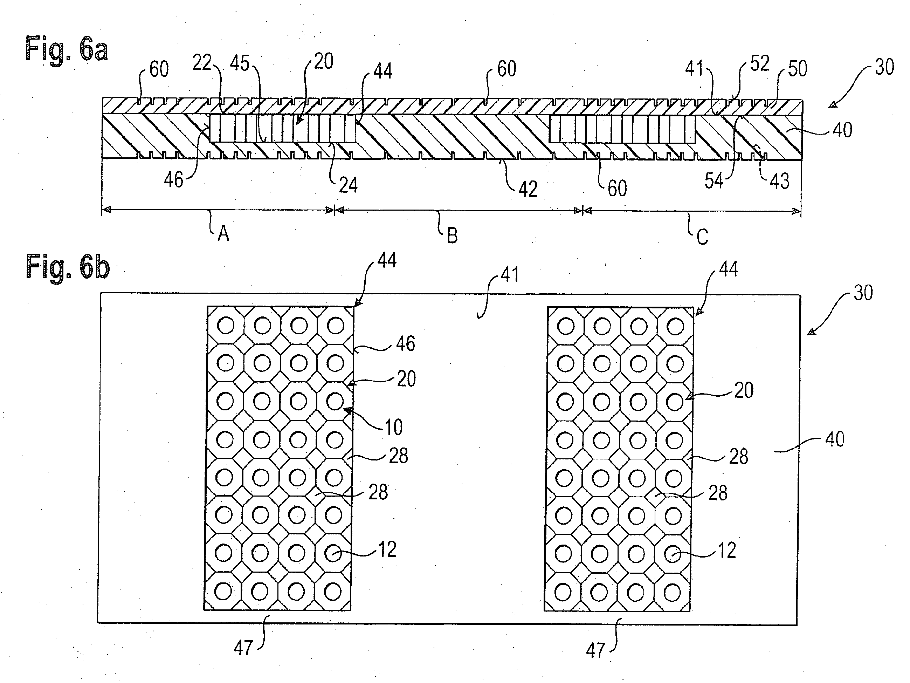

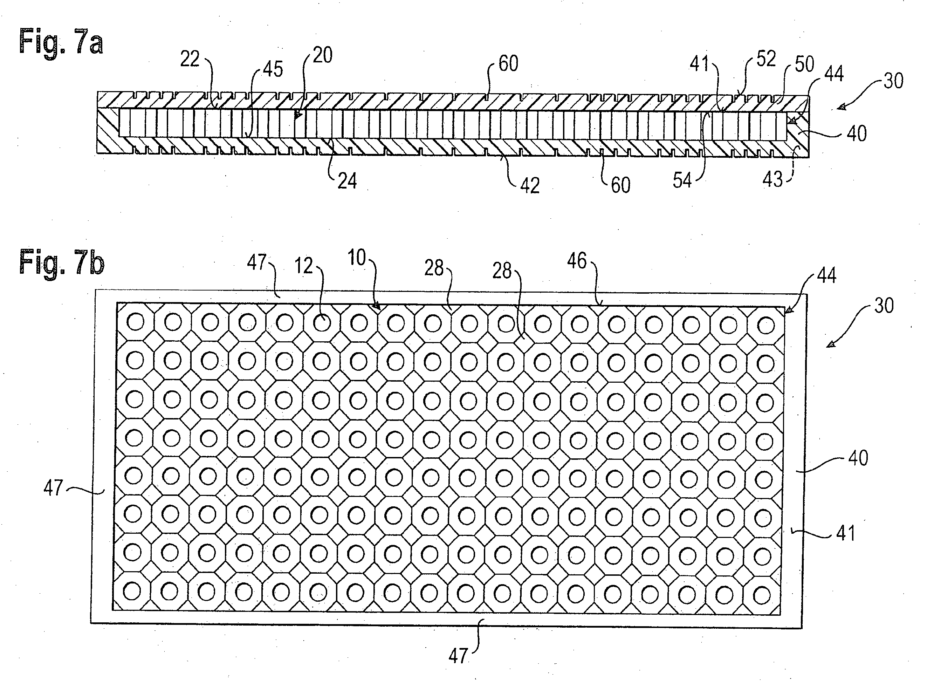

Die Ausgestaltungsformen der Figuren 5a bis 7b unterscheiden sich vorrangig durch die Anzahl der Aussparungen 44 und deren Größe. So ist in den Fig. 5b und 7b lediglich eine Aussparung 44 vorgesehen, wohingegen in Fig. 6b zwei Aussparungen 44 ausgebildet sind. In Fig. 5b ist die Aussparung in einem ersten Bereich A des Grundkörpers 40, das heißt in der Schulterzone, angeordnet. In Fig. 6b ist zusätzlich eine zweite Aussparung 44 in einem zweiten Bereich C, etwa in der Gesäß-/Hüftzone, vorgesehen. Zwischen erstem Bereich A und drittem Bereich C befindet sich der zweite Bereich B. In Fig. 7b erstreckt sich die Aussparung 44 nahezu vollständig über die Grundfläche des Grundkörpers 40, wobei die Wandung 47 einen ausreichenden seitlichen Halt der Federelementeinheit 20 gewährleistet.

Des Weiteren weisen der Grundkörper 40 und der Abdeckkörper 50, wie in den Fig. 5a bis 7b gezeigt, zueinander parallele Einschnitte 60 auf. Hierbei sind die Einschnitte 60 im Bereich der Oberseite 52 des Abdeckkörpers 50 und im Bereich der Unterseite 42 des Grundkörpers 40 in Form einer Materialausnehmung eingebracht. Diese Einschnitte 60 reduzieren die Oberflächenspannung und tragen somit zu einer Verbesserung der Punktelastizität des Polsterelementes 30 bei.

Wie aus den Figuren 5a bis 7b ersichtlich, weisen die Einschnitte 60 in den Bereichen A, B, C unterschiedliche Abstände auf. So fällt der Abstand zwischen den Einschnitten 60 sowohl im Grundkörper 40 als auch im Abdeckkörper 50 im Bereich der Aussparung 44, das heißt in Fig. 5b im ersten Bereich A und in Fig. 6b im dritten Bereich C jeweils enger aus als in dem mittleren Bereich B der Figuren 5b und 6b. Mit anderen Worten ist der Abstand der Einschnitte 60 im Bereich der Federelementeinheiten 20 geringer gewählt. So kann die Elastizität in diesen Bereichen mittels der Einschnitte 60 zusätzlich eingestellt werden. Beispielsweise kann die Elastizität durch engere Abstände der Einschnitte 60 erhöht werden. Bei der Variante gemäß Fig. 7b sind die Einschnitte 60 darüber hinaus im Bereich der einzigen, großflächigen Aussparung 44 in mehreren Unterbereichen in unterschiedlichen Abständen positioniert. Auf diese Weise lässt sich die bereits durch die großflächige Federelementeinheit 20 bereitgestellte Punktelastizität detailliert einstellen.

Schließlich unterscheiden sich die in Fig. 7b und Fig. 5b dargestellten Einschnitte 60 von den in Fig. 6b dargestellten Einschnitten 60 durch eine sich nach innen erweiternde Querschnittsform in Form eines Tropfens.

**Bezugszeichenliste**

| | | | |
|---|---|---|---|
| 10 | Federelement | 60 | Einschnitt |
| 12 | Ausnehmung | | |
| 14 | Oberseite | A | erster Bereich |
| 15 | Unterseite | B | zweiter Bereich |
| 16 | Mantelfläche | C | dritter Bereich |
| 17 | Anschlussfläche | | |
| 18 | Seitenfläche | | |
| | | | |
| 20 | Federelementeinheit | | |
| 22 | Oberseite | | |
| 24 | Unterseite | | |
| 26 | Seitenfläche | | |
| 28 | Freiraum | | |
| | | | |
| 30 | Polsterelement | | |
| | | | |
| 40 | Grundkörper | | |
| 41 | Oberseite | | |
| 42 | Unterseite | | |
| 43 | Seitenfläche | | |
| 44 | Aussparung | | |
| 45 | Grundfläche | | |
| 46 | Randfläche | | |
| 47 | Wandung | | |
| | | | |
| 50 | Abdeckkörper | | |
| 52 | Oberseite | | |
| 54 | Unterseite | | |

## Patentansprüche

1. Federelementeinheit (20) mit einer Vielzahl von einzelnen Federelementen (10) für ein Polsterelement (30), insbesondere eine Matratze, wobei das Federelement (10) aus einem offenzelligen Polyurethan-Weichschaumstoff besteht und dass in dem Federelement (10) wenigstens eine Ausnehmung (12) vorgesehen ist und wobei die Vielzahl von Federelementen (10) nebeneinander angeordnet sind, **dadurch gekennzeichnet, dass** die Federelemente (10) untereinander stoffschlüssig verbunden sind und die stoffschlüssige Verbindung wenigstens teilweise elastisch ist.

2. Federelementeinheit (20) nach Anspruch 1, **dadurch gekennzeichnet, dass** die Ausnehmung (12) das Federelement (10) in dessen Axialrichtung vollständig durchdringt.

3. Federelementeinheit (20) nach Anspruch 1 oder 2, **dadurch gekennzeichnet, dass** das Federelement (10) aus Formschaum gefertigt ist.

4. Federelementeinheit (20) nach einem der Ansprüche 1 bis 3, **dadurch gekennzeichnet, dass** die Ausnehmung (12) etwa mittig angeordnet ist.

5. Federelementeinheit (20) nach einem der Ansprüche 1 bis 4, **dadurch gekennzeichnet, dass** die Ausnehmung (12) im Querschnitt und/oder im Längsschnitt eine geradlinige oder kurvenartige Form aufweist.

6. Federelementeinheit (20) nach einem der Ansprüche 1 bis 5, **dadurch gekennzeichnet, dass** das Federelement (10) im Querschnitt eine achteckige oder kreisförmige Form aufweist.

7. Federelementeinheit (20) nach einem der Ansprüche 1 bis 6, **dadurch gekennzeichnet, dass** die Federelemente (10) untereinander verklebt sind.

8. Federelementeinheit (20) nach einem der Ansprüche 1 bis 7, **dadurch gekennzeichnet, dass** die Federelemente (10) derart nebeneinander angeordnet sind, dass in einem Bereich zwischen den Aussenflächen benachbarter Federelemente (10) ein Freiraum (28) vorhanden ist.

9. Polsterelement (30), insbesondere Matratze, mit einem Grundkörper (40) und einer Federelementeinheit (20) nach einem der vorhergehenden Ansprüche.

10. Polsterelement (30) nach Anspruch 9, **dadurch gekennzeichnet, dass** der Grundkörper (40) wenigstens eine Aussparung (44) aufweist, in der die Federelementeinheit (20) aufgenommen ist.

11. Polsterelement (30) nach Anspruch 9 oder 10, **dadurch gekennzeichnet, dass** ein Abdeckkörper (50) zur Auflage auf der Federelementeinheit (20) und/oder auf dem Grundkörper (40) vorgesehen ist, wobei der Abdeckkörper (50) stoffschlüssig mit dem Grundkörper (40) und/oder der Federelementeinheit (20) verbunden, vorzugsweise verklebt, ist.

12. Polsterelement (30) nach einem der Ansprüche 9 bis 11, **dadurch gekennzeichnet, dass** die Federelementeinheit (20) mit dem Grundkörper (40) stoffschlüssig verbunden, vorzugsweise verklebt, ist.

13. Polsterelement (30) nach einem der Ansprüche 9 bis 12, **dadurch gekennzeichnet, dass** der Grundkörper (40) und/oder der Abdeckkörper (50) aus Polyurethan-Weichschaumstoff hergestellt sind.

14. Polsterelement (30) nach Anspruch 13, **dadurch gekennzeichnet, dass** sich die Eindrückhärte der Federelementeinheit (20) von der Eindrückhärte des Grundkörpers (40) und/oder des Abdeckkörpers (50) unterscheidet.

15. Polsterelement (30) nach einem der Ansprüche 9 bis 14, **dadurch gekennzeichnet, dass** die Eindrückhärte der Federelementeinheit (20) in einem Bereich von etwa 40 N bis etwa 350 N, vorzugsweise in einem Bereich von etwa 60 N bis etwa 260 N, liegt.

16. Polsterelement (30) nach einem der Ansprüche 9 bis 15, **dadurch gekennzeichnet, dass** Grundkörper (40) und/oder der Abdeckkörper (50) zueinander parallele Einschnitte (60) aufweist.

17. Polsterelement (30) nach Anspruch 16, **dadurch gekennzeichnet, dass** die Einschnitte (60) unterschiedliche Abstände voneinander aufweisen.

18. Polsterelement (30) nach Anspruch 16 oder 17, **dadurch gekennzeichnet, dass** die Einschnitte (60) einen sich nach innen erweiternden Querschnitt, insbesondere einen tropfenförmigen Querschnitt, aufweisen.

19. Polsterelement (30) nach einem der Ansprüche 9 bis 18, **dadurch gekennzeichnet, dass** der Grundkörper (40) und/oder der Abdeckkörper (50) aus Blockschaum gefertigt sind.

20. Polsterelement (30) nach einem der Ansprüche 9 bis 19, **dadurch gekennzeichnet, dass** die Federelementeinheit (20) aus Formschaum gefertigt ist.

21. Polsterelement (30) nach einem der Ansprüche 11 bis 20, **dadurch gekennzeichnet, dass** der Abdeckkörper (50) einen luftdurchlässigen Bezug umfasst.

## Claims

1. A spring element unit (20) with a plurality of single spring elements (10) for a cushion element (30), particularly a mattress, wherein the spring element (10) is made of an open-celled flexible polyurethane foam and at least one recess (12) is provided in the spring element (10) and wherein the plurality of spring elements (10) is placed side-by-side, **characterized in that** the spring elements (10) are materially interconnected and the material connection is at least partially elastic.

2. A spring element unit (20) according to claim 1, **characterized in that** the recess (12) entirely penetrates the spring element (10) in the axial direction thereof.

3. A spring element unit (20) according to claim 1 or 2, **characterized in that** the spring element (10) is made of moulded foam.

4. A spring element unit (20) according to any of the claims 1 to 3, **characterized in that** the recess (12) is arranged roughly in the middle.

5. A spring element unit (20) according to any of the claims 1 to 4, **characterized in that** the recess (12) has a straight or curved shape in cross-section and / or longitudinal section.

6. A spring element unit (20) according to any of the claims 1 to 5, **characterized in that** the spring element (10) has an octagonal or circular shape in cross-section.

7. A spring element unit (20) according to any of the claims 1 to 6, **characterized in that** the spring elements (10) are adhesively bonded with one another.

8. A spring element unit (20) according to any of the claims 1 to 7, **characterized in that** the spring elements (10) are arranged side-by-side such that a clearance (28) is existent in a portion between the outer faces of neighboring spring elements (10).

9. A cushion element (30), particularly a mattress, with a base body (40) and a spring element unit (20) according to any of the preceding claims.

10. A cushion element (30) according to claim 9, **characterized in that** the base body (40) comprises at least one cavity (44), in which the spring element unit (20) is accommodated.

11. A cushion element (30) according to claim 9 or 10, **characterized in that** a cover body (50) is provided for placement on the spring element unit (20) and / or on the base body (40), the cover body (50) being materially connected, preferably adhesively bonded, with the base body (40) and / or the spring element unit (20).

12. A cushion element (30) according to any of the claims 9 to 11, **characterized in that** the spring element unit (20) is materially connected, preferably adhesively bonded, with the base body (40).

13. A cushion element (30) according to any of the claims 9 to 12, **characterized in that** the base body (40) and / or the cover body (50) are made of flexible polyurethane foam.

14. A cushion element (30) according to claim 13, **characterized in that** the indentation hardness of the spring element unit (20) differs from the indentation hardness of the base body (40) and / or the cover body (50).

15. A cushion element (30) according to any of the claims 9 to 14, **characterized in that** the indentation hardness of the spring element unit (20) is in a range of roughly 40 N to roughly 350 N, preferably in a range of roughly 60 N to roughly 260 N.

16. A cushion element (30) according to any of the claims 9 to 15, **characterized in that** the base body (40) and / or the cover body (50) comprise nicks (60) parallel to each other.

17. A cushion element (30) according to claim 16, **characterized in that** the nicks have different distances to one another.

18. A cushion element (30) according to claim 16 or 17, **characterized in that** the nicks (60) comprise an inwardly expanding cross-section, particularly a droplet-shaped cross-section.

19. A cushion element (30) according to any of the claims 9 to 18, **characterized in that** the base body (40) and / or the cover body (50) are made of slabstock foam.

20. A cushion element (30) according to any of the claims 9 to 19, **characterized in that** the spring element unit (20) is made of moulded foam.

21. A cushion element (30) according to any of the claims 11 to 20, **characterized in that** the cover body (50) comprises a breathable ticking.

## Revendications

1. Unité formée d'éléments à ressort (20) comprenant une pluralité d'éléments à ressort individuels (10), destinée à un élément de rembourrage (30), en particulier un matelas, dans laquelle l'élément à ressort (10) est constitué d'une mousse souple de polyuréthane à cellules ouvertes, et en ce qu'il est prévu dans l'élément à ressort (10) au moins un évidement (12), et dans laquelle la pluralité d'éléments à ressort (10) sont agencés les uns à côté des autres, **caractérisée en ce que** les éléments à ressort (10) sont reliés les uns aux autres par coopération de matières, et la liaison par coopération de matières est au moins partiellement élastique.

2. Unité formée d'éléments à ressort (20) selon la revendication 1, **caractérisée en ce que** l'évidement (12) traverse l'élément à ressort (10) entièrement dans sa direction axiale.

3. Unité formée d'éléments à ressort (20) selon la revendication 1 ou 2, **caractérisée en ce que** l'élément à ressort (10) est fabriqué à partir de mousse moulée.

4. Unité formée d'éléments à ressort (20) selon l'une des revendications 1 à 3, **caractérisée en ce que** l'évidement (12) est agencé approximativement au milieu.

5. Unité formée d'éléments à ressort (20) selon l'une des revendications 1 à 4, **caractérisée en ce que** l'évidement (12) présente, en section transversale et/ou en section longitudinale, une forme rectiligne ou une forme incurvée.

6. Unité formée d'éléments à ressort (20) selon l'une des revendications 1 à 5, **caractérisée en ce que** l'élément à ressort (10) présente, en section transversale, une forme octogonale ou une forme circulaire.

7. Unité formée d'éléments à ressort (20) selon l'une des revendications 1 à 6, **caractérisée en ce que** les éléments à ressort (10) sont collés les uns aux autres.

8. Unité formée d'éléments à ressort (20) selon l'une des revendications 1 à 7, **caractérisée en ce que** les éléments à ressort (10) sont agencés les uns à côté des autres de telle manière qu'il existe un espace libre (28) dans une zone entre les surfaces extérieures d'éléments à ressort (10) voisins.

9. Élément de rembourrage (30), en particulier matelas, comprenant un corps de base (40), et une unité formée d'éléments à ressort (20) selon l'une des revendications précédentes.

10. Élément de rembourrage (30) selon la revendication 9, **caractérisé en ce que** le corps de base (40) comporte au moins un évidement (44) dans lequel est reçue l'unité formée d'éléments à ressort (20).

11. Élément de rembourrage (30) selon la revendication 9 ou 10, **caractérisé en ce qu'**il est prévu un corps de recouvrement (50) pour être posé sur l'unité formée d'éléments à ressort (20) et/ou sur le corps de base (40), dans lequel le corps de recouvrement (50) est relié par coopération de matières avec le corps de base (40) et/ou l'unité formée d'éléments à ressort (20), de préférence collé.

12. Élément de rembourrage (30) selon l'une des revendications 9 à 11, **caractérisé en ce que** l'unité formée d'éléments à ressort (20) est relié par coopération de matières avec le corps de base (40), de préférence collée.

13. Élément de rembourrage (30) selon l'une des revendications 9 à 12, **caractérisé en ce que** le corps de base (40) et/ou le corps de recouvrement (50) sont réalisés en mousse souple de polyuréthane.

14. Élément de rembourrage (30) selon la revendication 13, **caractérisé en ce que** la résistance à l'enfoncement de l'unité formée d'éléments à ressort (20) diffère de la résistance à l'enfoncement du corps de base (40) et/ou du corps de recouvrement (50).

15. Élément de rembourrage (30) selon l'une des revendications 9 à 14, **caractérisé en ce que** la résistance à l'enfoncement de l'unité formée d'éléments à ressort (20) tombe dans une plage d'environ 40 N à environ 350 N, de préférence dans une plage d'environ 60 N à environ 260 N.

16. Élément de rembourrage (30) selon l'une des revendications 9 à 15, **caractérisé en ce que** le corps de base (40) et/ou le corps de recouvrement (50) comporte(nt) des entailles (60) mutuellement parallèles.

17. Élément de rembourrage (30) selon la revendication 16, **caractérisé en ce que** les entailles (60) présentent des distances différentes les unes par rapport aux autres.

18. Élément de rembourrage (30) selon la revendication 16 ou 17, **caractérisé en ce que** les entailles (60) ont une section transversale qui va en s'élargissant vers l'intérieur, en particulier une section transversale en forme de goutte.

19. Élément de rembourrage (30) selon l'une des revendications 9 à 18, **caractérisé en ce que** le corps de base (40) et/ou le corps de recouvrement (50) sont fabriqués à partir de blocs de mousse.

20. Élément de rembourrage (30) selon l'une des revendications 9 à 19, **caractérisé en ce que** l'unité formée d'éléments à ressort (20) est fabriquée en mousse moulée.

21. Élément de rembourrage (30) selon l'une des revendications 11 à 20, **caractérisé en ce que** le corps de recouvrement (50) inclut une enveloppe perméable à l'air.
